# FASCICULE DE BREVET EUROPEEN

(11) **EP 0 776 266 B1**
(45) Date de publication et mention de la délivrance du brevet: **17.09.2003**
(21) Numéro de dépôt: 96918732.7
(22) Date de dépôt: 29.05.1996
(51) Int. Cl.: B29C 45/27

(54) **ENSEMBLE D'INJECTION POUR UN MOULE D'INJECTION DE MATIERE PLASTIQUE**
SPRITZGIESSVORRICHTUNG FÜR EINE FORM ZUM SPRITZGIESSEN VON KUNSTSTOFF
INJECTION ASSEMBLY FOR A PLASTIC INJECTION MOULD

(30) Priorité: 30.05.1995 FR 9506367; 12.03.1996 FR 9603092
(43) Date de publication de la demande: 04.06.1997
(73) Titulaire: DELACHAUX S.A., 92230 Gennevilliers (FR)
(72) Inventeur: RAMOND, Louis, Maurice, F-93170 Bagnolet (FR)
(74) Mandataire: Hermann, Jean-Claude Victor
(86) Numéro de dépôt international: FR9600806
(87) Numéro de publication internationale: WO96038284

(56) Documents cités:
- EP-A- 0 262 490
- EP-A- 0 425 981
- EP-A- 0 457 166
- EP-A- 0 590 678
- DE-A- 2 734 746
- DE-B- 2 145 266
- DE-U- 9 012 232
- KUNSTSTOFFE, vol. 85, no. 2, Février 1995, page 176 XP000487985 BAGUSCHE G.: "HINTERSPRITZEN UND BALANCIEREN EINES ETAGEN-WERKZEUGS"

## Description

La présente invention concerne un ensemble d'injection pour un moule d'injection de matière plastique.

De manière plus particulière l'invention concerne un ensemble d'injection pour moule d'injection de matière plastique, comprenant :
- des buses chauffantes pour injecter la matière plastique dans le moule,
- ces buses étant alimentées en matière plastique par au moins une buse centrale, à partir de la vis d'extrusion,
- des moyens de commande des buses et de chauffage des canaux d'alimentation des buses,
- cet ensemble d'injection étant destiné à être monté sur la matrice du moule d'injection.

Actuellement pour l'injection de pièces en matière plastique de grandes dimensions, par exemple celles destinées à l'industrie automobile, on équipe le moule d'injection d'un ensemble d'injection comprenant des buses chauffantes pour permettre d'injecter la matière plastique simultanément en différents endroits du moule afin d'assurer une répartition rapide et très uniforme de la matière plastique à l'intérieur du moule, condition indispensable pour fabriquer des pièces de grandes dimensions, de bonnes qualités mécaniques et esthétiques.

Or, cet ensemble d'injection se réalise actuellement par l'usinage d'un bloc en acier forgé, dans lequel on réalise les passages pour recevoir les buses, les canaux d'alimentation des buses et les canaux d'alimentation en fluide de commande des vérins des buses, du fluide caloporteur ou pour le passage des câbles électriques d'alimentation.

Or, de tels travaux d'usinage sont extrêmement longs car il faut enlever une partie importante de matière ; ces travaux sont également très délicats et l'ensemble d'injection ne donne pas toujours satisfaction sur le plan de la répartition de la chaleur, l'uniformité de la température à l'intérieur de l'ensemble, etc.

On a déjà proposé, dans DE 90 12 232, un ensemble d'injection du type indiqué en préambule, dans lequel le bloc précité est remplacé par deux composants distincts, à savoir un distributeur chauffant et une semelle portant ce distributeur chauffant, et dans lequel :
A - la semelle est une pièce munie d'une réservation pour loger le distributeur chauffant et d'appuis de positionnement du distributeur chauffant,
B - le distributeur chauffant est une pièce formant un ensemble de canaux chauffants reliés à au moins un point d'entrée de la matière plastique par la buse centrale et aux buses d'injection, comprenant :
   - des plots au niveau desquels les canaux chauffants du distributeur sont reliés aux buses d'injection et à la buse centrale et au niveau desquels le distributeur chauffant s'appuie sur la semelle,
   - des branches reliant les plots des buses d'injection et le plot de la buse centrale.

Dans cet ensemble d'injection connu, le distributeur chauffant est simplement en appui coulissant, à plat, contre la semelle et, quelle que puisse être la relation, par ailleurs non décrite, entre la semelle et les buses d'injection, le distributeur chauffant est ainsi en appui coulissant, à plat, contre les buses d'injection, par l'intermédiaire de la semelle.

En pratique, en l'absence de toute description et de toute illustration d'un quelconque moyen de montage des buses d'injection sur la semelle, on peut supposer que cette semelle est elle-même en appui coulissant, à plat, contre les buses d'injection qui sont quant à elles emboîtées dans des logements aménagés dans la matrice du moule, selon un montage par ailleurs connu.

Cet appui coulissant, à plat, du distributeur chauffant sur la semelle et, par l'intermédiaire de celle-ci, sur les buses, a pour fonction d'assurer à la fois une retenue des buses d'injection en position dans la matrice du moule et une étanchéité relative, empêchant les fuites de matière thermoplastique à la transition entre le distributeur, la semelle et les buses d'injection, ce qui nécessite des pressions d'appui considérables, obtenues par l'intermédiaire d'organes de précontrainte.

Dans le cas d'un tel ensemble d'injection, le distributeur chauffant et la semelle peuvent certes être considérés comme un tout que l'on peut monter et démonter d'un bloc par rapport à la matrice du moule, de façon simple et efficace, mais les buses d'injection doivent être montées et démontées individuellement, indépendamment de cet ensemble.

On a par ailleurs proposé, dans DE 2 145 266, un ensemble d'injection dans lequel une buse d'injection, emboîtée dans la matrice, est simplement en appui coulissant, à plat, directement contre un distributeur chauffant à l'opposé de celle-ci.

Dans cet autre ensemble d'injection connu, le distributeur chauffant porte, de façon solidaire, ce que l'on appelle communément une « torpille thermique » et un manchon thermique, destinés à assurer une conduction thermique entre le distributeur chauffant et l'intérieur d'une buse d'injection pour maintenir la matière thermoplastique, à l'intérieur de celle-ci, à une température aussi voisine que possible de la température à laquelle cette matière circule dans le distributeur.

Cette torpille thermique et ce manchon thermique pénètrent dans la buse d'injection mais ne participent en aucune façon à un quelconque assemblage de celle-ci avec le distributeur chauffant.

Dans le cas de ce document, comme dans le cas du document précédemment commenté, les buses doivent être montées dans la matrice du moule individuellement, préalablement au montage du distributeur chauffant sur cette matrice, et la semelle est indispensable pour retenir les buses dans leur position dans la matrice du moule et dans leur relation d'étanchéité vis-à-vis du distributeur chauffant.

La présente invention a pour but de remédier à ces inconvénients et se propose de créer un ensemble d'injection réalisable de manière particulièrement simple et efficace, permettant une adaptation parfaite à n'importe quelle disposition des buses d'injection, c'est-à-dire n'importe quelle forme de pièce à injecter, réglant les problèmes de régularité de température et permettant de manière générale de fabriquer des produits injectés d'excellente qualité.

A cet effet, l'invention concerne un ensemble d'injection destiné à être monté sur une matrice d'un moule d'injection de matière plastique et comprenant :
- des buses d'injection pour injecter la matière plastique dans le moule, ces buses d'injection étant alimentées en matière plastique par au moins une buse centrale,
- des moyens de commande des buses dans le cas de buses commandées,
- une semelle portant un distributeur chauffant, ensemble d'injection dans lequel :
   A - la semelle est une pièce munie d'une réservation pour loger le distributeur chauffant et d'appuis de positionnement du distributeur chauffant,
   B - le distributeur chauffant est une pièce formant un ensemble de canaux chauffants reliés à au moins un point d'entrée de la matière plastique par la buse centrale et aux buses d'injection, comprenant :
      - des plots au niveau desquels les canaux chauffants du distributeur sont reliés aux buses d'injection et à la buse centrale et au niveau desquels le distributeur chauffant s'appuie sur la semelle,
      - des branches reliant les plots des buses d'injection et le plot de la buse centrale,

comme il est connu d'après DE 90 12 232, cet ensemble d'injection étant caractérisé en ce que le distributeur chauffant est un support mécanique, indépendant de la semelle, et porte les buses d'injection et la buse centrale.

Des modes particuliers de réalisation de l'invention font l'objet des revendications dépendantes.

L'ensemble d'injection selon l'invention présente de multiples avantages tant à la conception et fabrication qu'à l'utilisation. L'ensemble d'injection étant formé de deux parties distinctes sa conception est particulièrement souple et simple à réaliser d'autant plus que ces parties sont en fonte ou acier moulé.

L'usinage, c'est-à-dire le temps nécessaire au façonnage de ces deux pièces est extrêmement réduit puisque le travail sur machine se limite à l'usinage des surfaces de référence, des surfaces d'appui, et des centrages pour les buses.

Cette réduction de temps est considérable par rapport au temps d'usinage de l'ensemble d'injection selon l'art antérieur, d'autant plus qu'il s'agit de pièces de dimensions importantes.

L'ensemble selon l'invention est beaucoup plus léger que celui de l'art antérieur si bien que le temps de montée en température est réduit dans ces mêmes proportions.

L'isolation thermique entre la partie chauffée de l'ensemble, c'est-à-dire le distributeur chauffant et les buses, limite les déperditions thermiques et facilite la régulation de la température de ces pièces directement en contact avec la matière plastique à maintenir en température.

La réduction du distributeur aux seules parties fonctionnelles strictement nécessaires : les plots pour le support des buses et les branches formant les canaux et constituant le support des plots et ainsi des buses, aboutit à une partie à chauffer et à réguler de masse très faible ce qui permet une amélioration importante du rendement du moule et de la qualité des pièces moulées en plastique.

La mise en place des moyens de chauffage, (résistances blindées et fermées) dans les gorges ou rainures des branches et des plots assure un chauffage efficace de la matière plastique ; cette mise en place des résistances blindées et fermées est extrêmement simple et rapide, d'autant plus qu'il n'y a en général qu'une seule rainure, continue sur le dessus et une rainure continue sur le dessous de sorte qu'il n'y aura que deux résistances blindées et fermées.

Les canaux et les buses étant très accessibles, la mise en place des sondes de température est simple et l'inertie thermique ou le temps de réponse réduits au minimum.

Suivant une autre caractéristique avantageuse les branches du distributeur chauffant ont une section rectangulaire, traversée sensiblement en son milieu par un perçage constituant le canal de la matière plastique et comportant dans au moins certaines des faces, des rainures destinées à recevoir une résistance blindée et fermée.

Ces rainures sont de préférence réalisées au moment de la coulée du distributeur et elles ne nécessitent aucun usinage particulier.

Suivant d'autres caractéristiques les branches comportent quatre rainures réalisées dans les faces des branches pour recevoir des résistances blindées et fermées, et ces rainures se poursuivent autour des plots.

Suivant d'autres caractéristiques le distributeur chauffant comporte des pattes percées destinées à la fixation du distributeur dans sa réservation de la semelle.

Suivant d'autres caractéristiques le distributeur chauffant prend appui sur la semelle par l'intermédiaire d'éléments intercalaires d'isolation thermique.

Cet appui du distributeur uniquement au niveau des plots offre l'avantage de permettre un découplage thermique efficace entre le distributeur et la semelle tout en assurant une excellente tenue des buses, puisque l'appui et la fixation du distributeur se font au niveau des plots.

Suivant une autre caractéristique particulièrement avantageuse à l'emplacement des buses d'injection, le distributeur comporte des perçages traversants recevant une tête munie d'une jupe formant avec le corps un épaulement par lequel la tête est appliquée contre l'une des faces du distributeur, l'autre extrémité filetée de la tête recevant un écrou servant également d'appui contre le fond de la semelle, la jupe formant elle-même un appui pour la face avant de la matrice, autour du passage recevant la buse vissée par son extrémité filetée dans un filetage réalisé dans la jupe.

Un procédé pour la fabrication de l'ensemble et notamment du distributeur chauffant est caractérisé en ce qu'on :
- réalise une empreinte de distributeur composée d'éléments modulaires pour les plots et de branches reliant les plots,
- les éléments des plots étant positionnés suivant les emplacements prévus pour les buses,
- met en place les branches de liaison découpées dans un profilé et on bouche les jonctions entre les noyaux et les branches de liaison pour obtenir une continuité des surfaces transitoires,
- réalise le moule avec l'empreinte de distributeur,
- coule l'acier,
- usine les canaux, les perçages des buses ainsi que les surfaces de référence des plots,
- met en place les buses et les résistances blindées et fermées dans le distributeur,
- monte le distributeur ainsi équipé sur la semelle réalisée séparément en fonte ou acier moulé,
- branche les alimentations de la semelle au distributeur.

Le procédé de fabrication du modèle de fonderie est simple et souple puisque ce dernier est réalisé de manière modulaire à l'aide seulement de deux types d'éléments : les plots pour les buses et, les profilés coupés à la longueur, pour les branches.

La présente invention sera décrite ci-après de manière plus détaillée à l'aide d'un exemple de réalisation d'un ensemble d'injection représenté dans les dessins annexés dans lesquels :
- la figure 1 est une vue de côté d'un ensemble d'injection positionné par rapport à la matrice du moule et destiné à être réuni à cette matrice,
- la figure 2 est une vue de dessus d'une semelle d'un ensemble d'injection selon l'invention,
- la figure 3 est une vue en coupe selon la ligne brisée III-III de la figure 2,
- la figure 4 est une vue de dessus d'un distributeur chauffant destiné à une semelle selon la figure 2,
- la figure 5 est une vue en coupe selon V-V du distributeur de la figure 4,
- la figure 6 est une coupe transversale d'une branche reliant deux plots,
- la figure 7 est une coupe de la semelle, d'un injecteur et de la matrice,
- la figure 8 montre une variante de réalisation et de montage d'un injecteur dans un distributeur et une semelle,
- la figure 9 est une coupe d'une buse centrale.

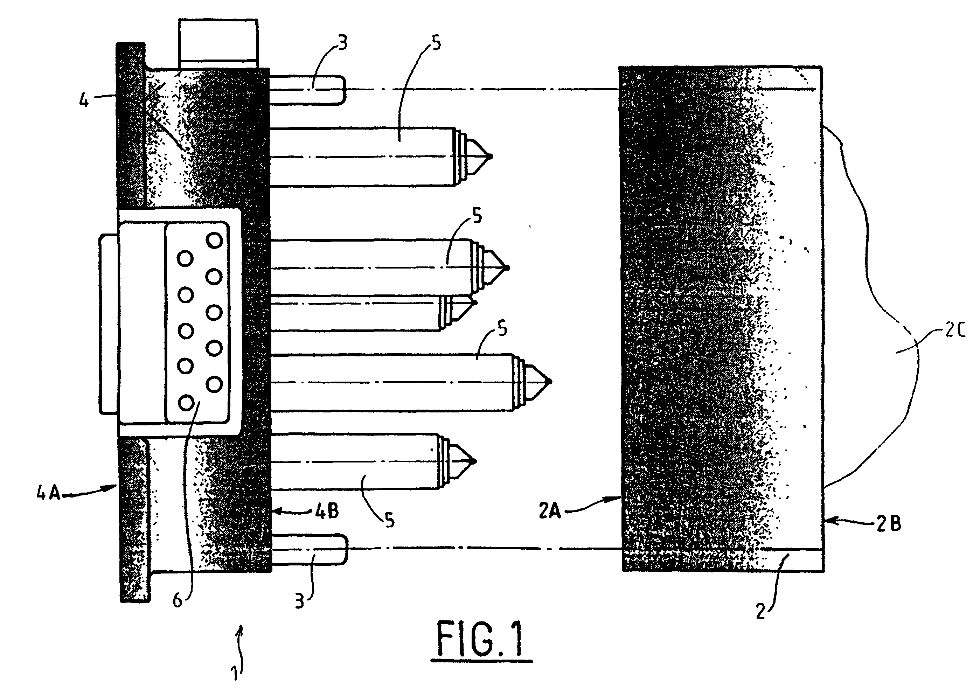

Selon la figure 1, l'invention concerne un ensemble d'injection 1 destiné à un moule d'injection représenté seulement par la matrice 2.

L'ensemble d'injection 1 se fixe à la matrice 2 par exemple par des broches 3 venant dans des logements correspondants de la matrice 2. Puis l'ensemble 1 est solidarisé à la matrice 2 pour ne former qu'une pièce restant solidaire pendant l'utilisation de la matrice. L'ensemble 1 peut se démonter de la matrice 2 pour permettre d'intervenir sur les buses d'injection, les remplacer ou d'agir sur leur commande.

L'ensemble 1 se compose d'une semelle 4 portant des buses 5 en général de longueurs différentes, avec ou sans obturateur suivant la pièce à injecter. Les buses 5 traversent des passages (non représentés) réalisés dans la matrice 2 pour venir à l'intérieur de la cavité de moulage de la matrice, aux endroits préalablement déterminés par le mouliste en fonction de la pièce à réaliser. Par convention selon la figure 1, la face arrière 4A de la semelle 4 est située à gauche, la face avant 4B à droite et de même la face arrière 2A de la matrice 2 est à gauche et la face avant à droite.

L'assemblage de l'ensemble 1 et de la matrice 2 se fait par les faces 4B et 2A. La face avant 4B de la semelle est usinée pour venir contre la face arrière 2A de la matrice 2 et la face arrière 2A de la semelle est dressée par usinage pour venir se plaquer sur le plateau machine (non représenté). La cavité du moule est située à droite de la face avant 2B. Schématiquement la matrice comporte une partie en relief 2C correspondant à la forme de la pièce à injecter.

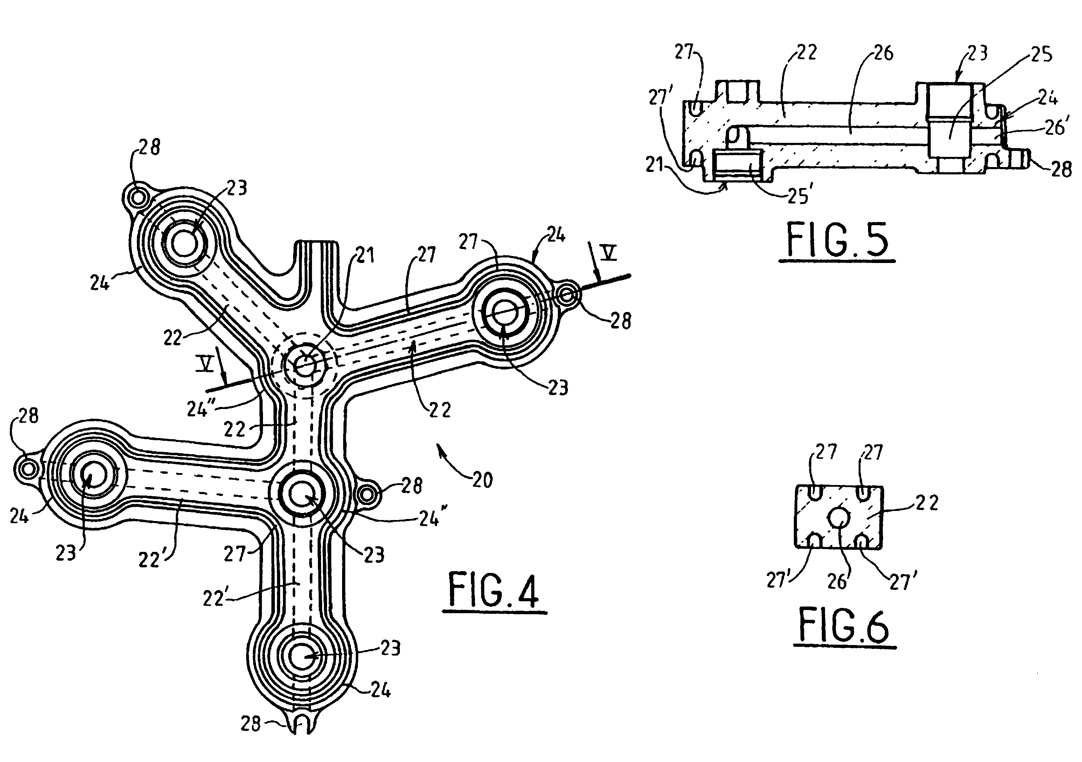

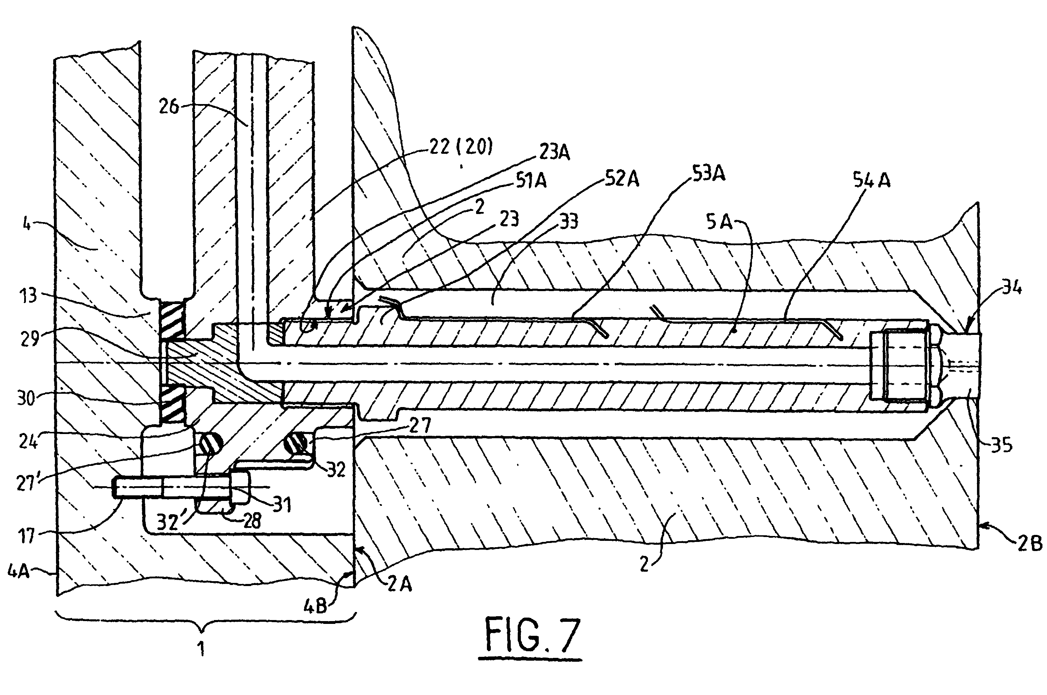

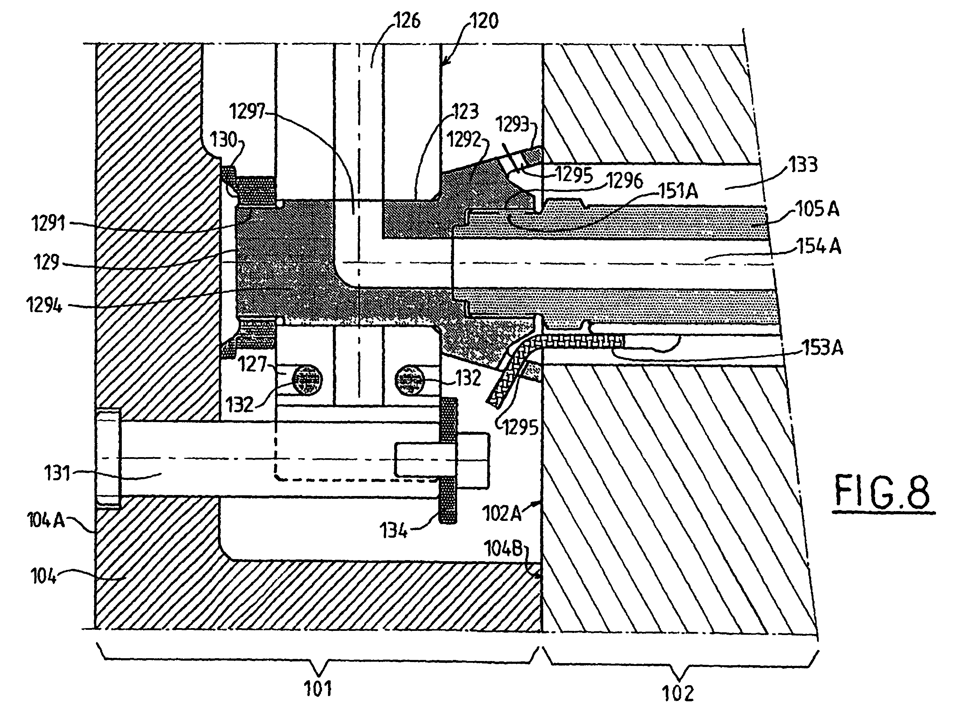

Ces buses d'injection 5, 5A (fig. 7) reçoivent la matière plastique par la buse centrale 5B (fig. 8) par un réseau de canaux en général chauffants, n'apparaissant pas à la figure 1. Ces canaux sont constitués par un distributeur chauffant portant les buses et qui est lui-même fixé à la semelle. Ce distributeur sera décrit de manière plus précise à l'aide des figures 4 à 6.

Les buses 5 simples sans obturateur débitent la matière à injecter dès que celle-ci est fournie alors que les buses à obturateur ne s'ouvrent et se ferment que sur commande ; elles sont commandées par du fluide hydraulique ; le chauffage se fait par un fluide caloporteur ou de préférence par un cordon électrique chauffant, pour chauffer toutes les parties au voisinage des canaux de matière plastique, c'est-à-dire le distributeur chauffant et les buses elles-mêmes ; les branchements des différents fluides et les branchements électriques sont regroupés sur le côté de la semelle 4, au niveau d'une plaque de connexion 6.

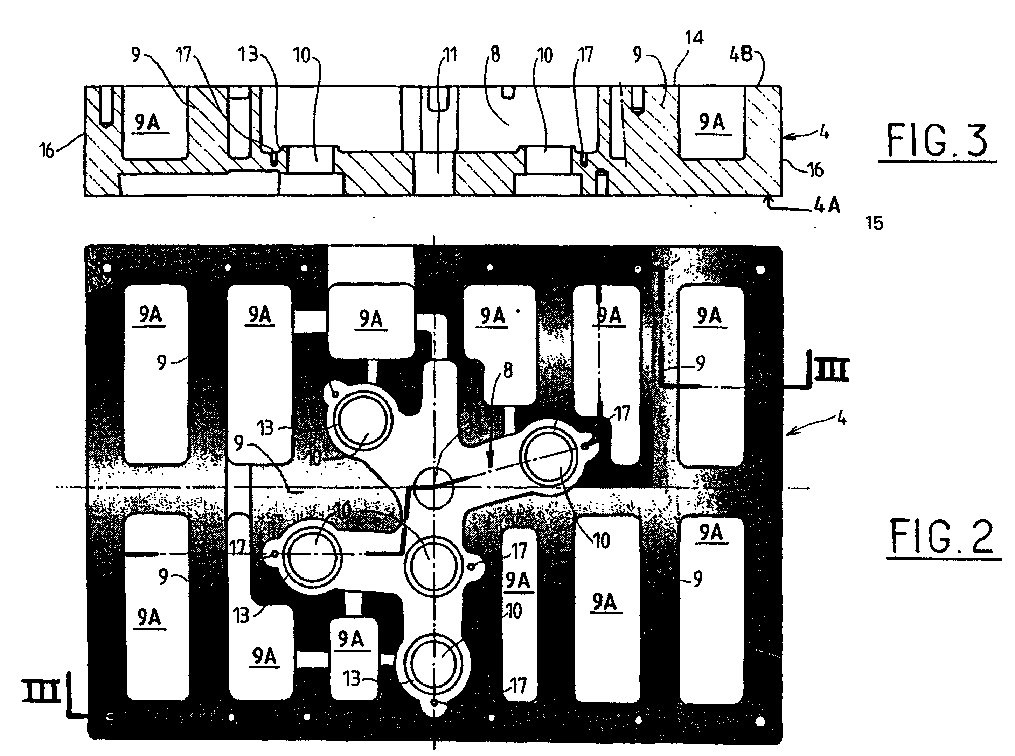

Les figures 2 et 3 montrent de manière plus précise un exemple de réalisation d'une semelle 4 et de l'emplacement 8 recevant le distributeur chauffant.

Les figures 4 à 6 montrent un distributeur chauffant 20 destiné à être monté dans la semelle 4.

Selon les figures 2, 3, la semelle 4 posée sur sa face arrière 4A, horizontalement est une pièce en fonte ou acier moulé munie de nervures de rigidification 9 laissant entre elles des cavités 9A et une réservation 8 correspondant à l'emplacement destiné à loger le distributeur chauffant (non représenté aux figures 2 et 3).

Le fond de la réservation 8 comporte des passages 10 pour les buses d'injection et un passage 11 pour la buse d'alimentation.

Dans l'exemple représenté les passages 10 sont étagés et leur ouverture dans la réservation 8 est bordée par une surface d'appui 13.

Le fond de la réservation 8 comporte également des taraudages 17 pour les vis de fixation du distributeur.

Cette réservation 8 comporte des passages 10 pour les buses de distribution 5A ainsi que le passage 11 pour la buse centrale 5B, c'est-à-dire la buse contre laquelle vient se placer la sortie de la vis d'extrusion fournissant la matière plastique.

Ces différents passages 10, 11 sont prévus aux emplacements précis destinés aux buses d'injection. Ces emplacements sont choisis par le mouliste en fonction de la pièce à réaliser, c'est-à-dire de sa forme, de sa géométrie, de son volume et des caractéristiques de la matière plastique utilisée. Des bossages entourant les passages sont réalisés dans la réservation correspondant sensiblement à la forme du distributeur. Cette partie en creux 8 comporte, au niveau des emplacements des buses, des surfaces d'appui 13 réalisées par les bossages dressés pour recevoir de manière précise le distributeur chauffant.

La semelle 4 est une pièce de fonte ou acier moulé dont les surfaces de référence seules sont usinées. Il s'agit par exemple de la surface 4B par laquelle la semelle 4 s'appuie contre la matrice 2 et le cas échéant la surface inférieure ou surface arrière 4A plaquée contre le plateau de la machine (figure 1).

Les surfaces d'appui 13 entourant les emplacements des buses sont également usinées, de même que les passages des buses (10, 11).

Le bord périphérique 16 et les nervures 9 de la semelle sont conçus pour donner à la semelle 4 la résistance nécessaire, tout en laissant des volumes libres aussi importants que possible pour alléger l'ensemble.

De préférence, la semelle a une épaisseur permettant de recevoir les buses d'injection et leurs moyens de commande (vérins) portés par la semelle ou directement par le distributeur chauffant ainsi que les différentes conduites de fluide et les câbles électriques.

Selon la figure 4, le distributeur chauffant 20, faisant partie de l'ensemble selon l'invention, représenté à titre d'exemple, est également une pièce en fonte ou acier moulé.

Le distributeur chauffant 20 est un support mécanique, indépendant de la semelle 4 ; il porte les buses d'injection 5A et la buse centrale 5B reliée aux buses d'injection 5A par un réseau de canaux traversés par la matière plastique en fusion.

La forme du distributeur chauffant 20 est conçue en fonction de la répartition de la position des buses d'injection 5A.

La buse centrale 5B est positionnée par le mouliste pour assurer la distribution la plus courte et la plus uniforme de la matière plastique entre les différentes buses d'injection 5A en tenant compte du fonctionnement propre de chaque buse.

En général, le distributeur chauffant 20 a une forme rayonnante à partir de l'origine constituée par l'emplacement 21 de la buse centrale 5B. Les branches 22 qui relient ce point 21 aux emplacements 23 des buses d'injection 5A sont en général directes ; il peut toutefois y avoir également des embranchements 22'.

De manière plus détaillée le distributeur chauffant 20 se compose de plots 24, 24' à l'emplacement des buses centrale 5B et de buses d'injection 5A. Les plots 24, 24' des buses d'injection sont reliés au plot 24" de la buse centrale par les branches 22, 22'.

Selon le présent exemple les plots 24, 24', 24" ont des orifices étagés standards 25, 25' recevant les buses non représentées et les branches 22 les reliant sont munies de canaux 26 débouchant dans les orifices 25, 25' de plots 24, 24', 24".

De fonderie, le distributeur 20 est muni de rainures 27, 27' suivant le contour des branches 22 et des plots 24, 24', 24". Ces rainures 27, 27' sont prévues sur la face supérieure et sur la face inférieure du distributeur 20 pour recevoir une résistance blindée et fermée destinée à maintenir le distributeur à la température nécessaire à la fluidité de la matière plastique.

Le distributeur chauffant 20 comporte également de fonderie des pattes 28 percées permettant de visser le distributeur 20 sur son emplacement dans sa réservation 8 de la semelle 4 où il est prévu des taraudages 17 pour recevoir les vis.

Les plots 24, 24', 24" qui reçoivent les injecteurs non représentés, ont un contour au moins en grande partie, constitué par une forme de révolution ; ils sont munis d'un orifice 25, 25', de préférence un perçage étagé, formant une chambre. Chaque injecteur est fixé de manière étanche dans son plot de façon à communiquer avec la chambre, celle-ci communiquant elle-même avec un canal 26 relié à la buse centrale 5B.

Comme le distributeur chauffant est une pièce en fonte ou acier moulé, les canaux 26 sont réalisés par des perçages débouchant à l'extérieur (26') ; ces parties de perçages 26' sont bouchées pour ne laisser subsister que les canaux 26 reliant par exemple la buse centrale 5B à la buse de distribution correspondante 5A.

Le distributeur chauffant 20 est relié à la semelle 4 seulement au niveau des appuis 13 avec interposition de rondelles isolantes pour éviter un pont thermique entre le distributeur 20 et la semelle 4.

La vue en coupe de la figure 5, passant par le plot 21" de la buse centrale 5B et le plot 24 d'une buse d'injection 5A montre le perçage étagé 25 recevant la buse centrale (non représentée) débouchant par la face arrière du distributeur 20 (face inférieure à la figure 5). Ce perçage 25' communique avec un canal 26 relié au perçage étagé 25 du plot 24 de la buse d'injection. Ce perçage débouche du distributeur par le prolongement 26' ayant servi à réaliser le canal 26.

Toutes les buses 5A, 5B sont montées dans les logements filetés standardisés.

Les branches 22 contenant les canaux 26 ont une section rectangulaire comme cela est représenté à la figure 6. Cette section rectangulaire montre le canal 26 ainsi que des rainures 27, 27' dans les faces, par exemple supérieure et inférieure de la branche 22. Ces rainures 27, 27' reçoivent les résistances blindées et fermées.

La figure 7 est une coupe partielle de l'ensemble d'injection 1 assemblé à la matrice 2, au niveau d'une buse d'injection 5A, l'assemblage étant représenté dans une position verticale comme à la figure 1. Le distributeur chauffant 20 est muni, au niveau du plot 24, d'un coude 29 dépassant de la face arrière du distributeur pour recevoir une rondelle isolante 30 séparant le distributeur 20 de son appui 13 du fond de la semelle 4. L'ensemble distributeur/semelle est relié par des vis 31.

Le coude 29 débouche dans le canal 26 du distributeur dont les rainures 27, 27' sont munies de résistances blindées et fermées électriques.

Les résistances blindées et fermées 32, 32' supérieures et inférieures sont placées dans les rainures correspondantes 27, 27' du plot 24.

Le passage 33 pour la buse 5A dans la matrice 2 du moule se termine à l'avant par un perçage de centrage 34 et de support de l'extrémité avant 35 de la buse, assurant en même temps l'étanchéité. A l'arrière la buse 5A comporte une partie filetée 51A vissée dans le taraudage 231 de l'emplacement 23 de la buse sur le distributeur 20. La partie filetée 51A est précédée d'une partie hexagonale 52A formant écrou pour le vissage de la buse 5A dans le distributeur 20. Cette figure montre également les sondes de température 53A, 54A.

Cette coupe montre le découplage thermique entre, d'une part, le distributeur chauffant 20 et sa buse 5A, et, d'autre part, la semelle 4 et la matrice 2.

La figure 8 est une vue en coupe analogue à celle de la figure 7 mais correspondant à une variante de réalisation et de montage du distributeur chauffant 120 et de la buse d'injection 105A.

L'ensemble d'injection 101 est assemblé à la matrice 102 par des moyens non représentés. Pour le montage de la buse 105A dans le distributeur 120, l'emplacement 123 est un perçage traversant non étage recevant une tête 129 avec un passage en forme de coude pour relier le canal 126 du distributeur 120 à la buse 105A.

Cette tête 129 permet de simplifier la forme et la réalisation du distributeur 120 dont les emplacements à buses tels que l'emplacement 123 sont de simples perçages traversants, non étagés et non taraudés.

La tête 129 identique, pour toutes les buses d'injection 105A, quelle que soit la longueur de celle-ci est une pièce cylindrique terminée d'un côté par une partie filetée 1291 et de l'autre par une jupe tronconique 1292 fermant à sa base, une surface d'appui 1293 correspondant à la face arrière 104B de la semelle 104 pour venir s'appuyer contre la face avant 102A de la matrice 102, autour du passage 133 recevant la buse 105A dans la matrice 102. Le corps 1294 de la tête 129 a une forme cylindrique circulaire adaptée au perçage 123 ; la longueur du corps correspond sensiblement à l'épaisseur du distributeur 120. La jupe 1291 forme un épaulement à sa jonction avec le corps 1294 pour appuyer la tête contre la face correspondante du distributeur 120 (face « inférieure »).

L'autre extrémité filetée 1291 reçoit un écrou 130 assurant le serrage de la tête 129 sur la semelle 120 et servant d'appui du distributeur contre le fond de la semelle 104. Cet écrou 130 est de préférence réalisé en un matériau mauvais conducteur de la chaleur pour isoler le distributeur par rapport à la semelle 104.

La jupe 1292 est munie de passages 1295 pour le passage des câbles des sondes 153A de la buse 105A.

Intérieurement, la jupe 1292 est munie d'un filetage 1296 pour recevoir l'extrémité filetée 151A de la buse 105A.

La tête 129 comporte un passage 1297 communiquant avec le passage 154A de la buse 105A. La pièce 129 réduit au minimum les ponts thermiques.

Le montage des buses dans le distributeur 120 simplifie considérablement la réalisation de celui-ci qui présente une épaisseur constante et des perçages traversants non étagés, sans taraudage. Cela facilite également les interventions sur le distributeur et plus généralement sur l'ensemble 101.

Les matériaux du distributeur 120 et des têtes 129 sont choisis de manière plus précise selon leurs fonctions ; la pièce 129 peut être traitée pour être plus résistante alors que cela n'est pas indispensable pour le distributeur 120.

Comme dans le mode de réalisation précédent, le distributeur comporte des résistances chauffantes 132 logées dans des rainures 127.

Enfin le distributeur 120 est relié à la semelle 120 par un boulon 131 avec interposition d'une rondelle isolante 1311.

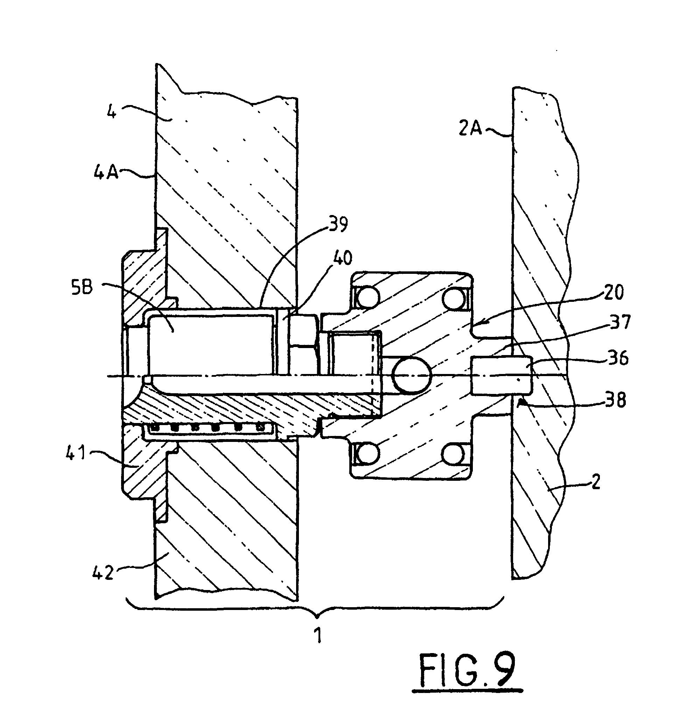

La figure 9 est une coupe partielle de l'ensemble d'injection 1 et de la matrice 2 passant par l'axe de la buse centrale 5B. Au droit de la buse centrale 5B, le distributeur chauffant 20 comporte un goujon de centrage et d'appui 36 engagé dans un logement 37 du distributeur et un perçage 38 dans la matrice 2.

La buse centrale 5B est tenue dans le passage 39 de la semelle 4 par son bord 40, du côté intérieur et par son chapeau 41, dans un lamage 42 de la face arrière de la semelle 4.

Selon une variante non représentée, la buse centrale peut également être montée dans le distributeur 20 comme dans l'exemple représenté à la figure 8 pour la buse d'injection, en adaptant le canal réalisé dans la tête 129 pour le faire déboucher par la face de l'extrémité filetée 1291 et en fermant l'extrémité à l'intérieur de la jupe 1292.

Cela permet d'uniformiser et de standardiser tous les emplacements des buses, qu'elles soient d'alimentation ou d'injection et de simplifier également la forme du distributeur.

L'ensemble 1 est réalisé en fonte ou acier moulé pour la semelle 4 et le distributeur chauffant 20.

La semelle 4 est coulée dans un moule puis ses surfaces de référence 14, 15 sont usinées de même que les passages 10, 11 des buses et les surfaces d'appui 13 du distributeur chauffant ainsi que les taraudages 17.

Les appuis 13 pour le distributeur 20 sont réalisés par un creux au fond de l'empreinte servant au moule de la semelle 4. La disposition des nervures 9 tient compte de la forme du distributeur chauffant 20.

La réalisation du distributeur chauffant 20 se fait à partir d'un moule obtenu à l'aide d'un noyau formé d'éléments modulaires : ces éléments modulaires sont les éléments dont la forme correspond aux plots et celle des branches reliant les plots. Les branches sont des segments de profilés, coupés à la longueur et assemblés.

Le noyau ainsi réalisé forme l'empreinte du moule du distributeur. L'usinage du distributeur se limite à celui des surfaces de références, des perçages formant les canaux et les perçages étagés traversant ou non par les buses.

L'assemblage de l'ensemble d'injection 1 consiste à monter les buses 5A, 5B, à raccorder les alimentations des vérins dans le cas de buses commandées, sur le distributeur chauffant et de mettre en place les résistances blindées et fermées 32, 32' et leur branchement électrique ainsi que les sondes de température.

Après son montage, le distributeur 20 est fixé dans la semelle 4 qui est elle-même assemblée à la matrice 2.

## Revendications

1. Ensemble d'injection destiné à être monté sur une matrice (2, 102) d'un moule d'injection de matière plastique et comprenant :
- des buses d'injection (5A, 105A) pour injecter la matière plastique dans le moule, ces buses d'injection (5A, 105A) étant alimentées en matière plastique par au moins une buse centrale (5B),
- des moyens de commande des buses dans le cas de buses commandées,
- une semelle (4, 104) portant un distributeur chauffant (20, 120), ensemble d'injection dans lequel :
A - la semelle (4, 104) est une pièce munie d'une réservation (8) pour loger le distributeur chauffant (20, 120) et d'appuis de positionnement (13) du distributeur chauffant (20),
B - le distributeur chauffant (20, 120) est une pièce formant un ensemble de canaux chauffants (26) reliés à au moins un point d'entrée (21, 5B) de la matière plastique par la buse centrale (5B) et aux buses d'injection (5A, 105A), comprenant:
- des plots (24, 24', 24", 130) au niveau desquels les canaux chauffants (26) du distributeur sont reliés aux buses d'injection (5A, 105A) et à la buse centrale (5B) et au niveau desquels le distributeur chauffant (20, 120) s'appuie sur la semelle (4),
- des branches (22) reliant les plots (24, 24', 130) des buses d'injection (5A, 105A) et le plot (24") de la buse centrale (5B),
**caractérisé en ce que** le distributeur chauffant (20) es un support mécanique, indépendant de la semelle (4), et porte les buses d'injection (5A, 105A) et la buse centrale (5B).

2. Ensemble d'injection selon la revendication 1, **caractérisé en ce que** le distributeur chauffant (20) porte également des moyens de commande (vérins) des buses d'injection (5A, 105A).

3. Ensemble d'injection selon la revendication 1, **caractérisé en ce que** la semelle (4, 104) porte également des moyens de commande (vérins) des buses d'injection (5A, 105A).

4. Ensemble d'injection selon l'une quelconque des revendications 2 et 3, **caractérisé en ce que** la semelle (4, 104) porte les différents conduits de fluide et les câbles électriques.

5. Ensemble d'injection selon la revendication 1, **caractérisé en ce que** la semelle (4) et le distributeur chauffant (20, 120) comportent des passages (10, 11, 23, 39, 123) pour les buses (5A, 5B, 105A).

6. Ensemble selon la revendication 1, **caractérisé en ce que** les branches (22) du distributeur chauffant (20, 120) ont une section rectangulaire, traversée sensiblement en son milieu par un perçage (26) constituant le canal de la matière plastique et comportant, dans au moins certaines des faces, des rainures (27, 27', 127) destinées à recevoir une résistance blindée et fermée (32, 32', 132).

7. Ensemble selon la revendication 6, **caractérisé en ce que** les branches (22) comportent quatre rainures (27, 27', 127) réalisées dans les faces des branches pour recevoir des résistances blindées et fermées (32, 32', 132), et ces rainures se poursuivent autour des plots (24, 24', 24").

8. Ensemble selon la revendication 1, **caractérisé en ce que** les plots (24, 24', 24") ont une forme de pièce de révolution.

9. Ensemble selon la revendication 1, **caractérisé en ce que** le distributeur chauffant comporte des pattes (28) percées destinées à la fixation du distributeur (20) dans sa réservation (8) de la semelle (4).

10. Ensemble selon la revendication 1, **caractérisé en ce que** le distributeur chauffant (20, 120) prend appui sur la semelle (4, 104) par l'intermédiaire d'éléments intercalaires (30, 130) d'isolation thermique.

11. Ensemble selon la revendication 5, **caractérisé en ce qu'**à l'emplacement (25) des buses d'injection (5A), le distributeur chauffant (20) comporte des perçages taraudés (25, 25') de vissage des buses d'injection (5A) par une extrémité filetée (51A) de celles-ci.

12. Ensemble selon la revendication 11, **caractérisé en ce que** les perçages taraudés (25, 25') de vissage des buses d'injection (5A) sont standardisés.

13. Ensemble selon la revendication 12, **caractérisé en ce que** les buses d'injection (5A) et la buse centrale (5B) sont montées dans des perçages tauraudés standardisés.

14. Ensemble selon la revendication 5, **caractérisé en ce qu'**à l'emplacement (130) des buses d'injection (105A), le distributeur chauffant (120) comporte des perçages traversants recevant une têtu (129) munie à une extrémité d'une jupe (1292) formant avec un corps (1294) de la tête (129) un épaulement par lequel la tête est appuyée contre l'une des faces du distributeur (120), l'autre extrémité (1291) de la tète (129) étant filetée et recevant un écrou (130) servant d'appui contre un fond de la semelle (104), la jupe (1292) formant elle-même un appui (1294) pour une face avant (102A) de la matrice, autour du passage (133) recevant la buse d'injection (105A) vissée par une extrémité filetée (151A) dans un filetage (1296) réalisé dans la jupe (1292).

15. Ensemble selon la revendication 14, **caractérisé en ce que** les têtes (129) sont identiques pour toutes les buses d'injection (105A).

16. Ensemble selon la revendication 15, **caractérisé en ce que** les emplacements des buses d'injection (105A) et de la buse centrale sont uniformisés et standardisés.

## Patentansprüche

1. Einspritz-Baugruppe, die dazu bestimmt ist, auf einem Gesenk bzw. Untergesenk (2, 102) eines Formwerkzeugs zum Einspritzen von Kunststoff montiert zu werden, und mit:
- Einspritzdüsen (5A, 105A) zum Einspritzen des Kunststoffs in das Formwerkzeug, wobei diese Einspritzdüsen (5A, 105A) von mindestens einer zentralen Düse (5B) mit Kunststoff versorgt werden,
- Mitteln zum Steuern der Düsen, im Fall gesteuerter Düsen, und
- einer Unterlage (4, 104), die einen beheizenden Verteiler (20, 120) trägt, wobei in der Einspritz-Baugruppe:
A - die Unterlage (4, 104) ein Teil ist, das mit einer Ausnehmung (8) versehen ist, um den beheizenden Verteiler (20, 120) unterzubringen, sowie mit Positionierungs-Auflagen (13) für den beheizenden Verteiler (20), und
B - der beheizende Verteiler (20, 120) ein Teil ist, das eine Gruppe beheizender Kanäle (26) bildet, die mit mindestens einem Einlaßpunkt (21, 5B) für Kunststoff durch die zentrale Düse (5B) und mit den Einspritzdüsen (5A, 105A) verbunden sind, mit
- Höckern (24, 24', 24", 130), auf deren Höhe die beheizenden Kanäle (26) des Verteilers mit den Einspritzdüsen (5A, 105A) und mit der zentralen Düse (5B) verbunden sind und auf deren Höhe sich der beheizende Verteiler (20, 120) auf der Unterlage (4) abstützt, und
- Verzweigungen (22), die die Höcker (24, 24', 130) der Einspritzdüsen (5A, 105A) und den Höcker (24") der zentralen Düse (5B) verbinden,
**dadurch gekennzeichnet, daß** der beheizende Verteiler (20) ein mechanischer Träger ist, der von der Unterlage (4) unabhängig ist und die Einspritzdüsen (5A, 105A) sowie die zentrale Düse (5B) trägt.

2. Einspritz-Baugruppe nach Anspruch 1, **dadurch gekennzeichnet, daß** der beheizende Verteiler (20) auch Steuermittel (Zylinder) der Einspritzdüsen (5A, 105A) trägt.

3. Einspritz-Baugruppe nach Anspruch 1, **dadurch gekennzeichnet, daß** die Unterlage (4, 104) auch Steuermittel (Zylinder) der Einspritzdüsen (5A, 105A) trägt.

4. Einspritz-Baugruppe nach irgendeinem der Ansprüche 2 und 3, **dadurch gekennzeichnet, daß** die Unterlage (4; 104) die verschiedenen Strömungsmittelleitungen und elektrischen Kabel trägt.

5. Einspritz-Baugruppe nach Anspruch 1, **dadurch gekennzeichnet, daß** die Unterlage (4) und der beheizende Verteiler (20, 120) Durchlässe (10, 11, 23, 39, 123) für die Düsen (5A, 5B, 105A) aufweisen.

6. Baugruppe nach Anspruch 1, **dadurch gekennzeichnet, daß** die Verzweigungen (22) des beheizenden Verteilers (20, 120) einen rechteckigen Querschnitt haben, der im wesentlichen in seiner Mitte von einer Bohrung (26) durchsetzt wird, die den Kanal für den Kunststoff bildet, und der in mindestens bestimmten Flächen Nuten (27, 27', 127) aufweist, die dazu bestimmt sind, einen abgekapselten und geschlossenen Widerstand (32, 32', 132) aufzunehmen.

7. Baugruppe nach Anspruch 6, **dadurch gekennzeichnet, daß** die Verzweigungen (22) vier Nuten (27, 27', 127) aufweisen, die in den Flächen der Verzweigungen ausgebildet sind, um abgekapselte und geschlossene Widerstände (32, 32', 132) aufzunehmen, und daß diese Nuten um die Höcker (24, 24', 24") herum fortgesetzt sind.

8. Baugruppe nach Anspruch 1, **dadurch gekennzeichnet, daß** die Höcker (24, 24', 24") die Form eines Rotationskörpers aufweisen.

9. Baugruppe nach Anspruch 1, **dadurch gekennzeichnet, daß** der beheizende Verteiler durchbohrte Laschen (28) aufweist, die zur Befestigung des Verteilers (20) in seiner Ausnehmung (8) der Unterlage (4) bestimmt sind.

10. Baugruppe nach Anspruch 1, **dadurch gekennzeichnet, daß** der beheizende Verteiler (20, 120) auf der Unterlage (4, 104) aufsitzt, und zwar mittels Zwischenelementen (30, 130) zur Wärmeisolierung.

11. Baugruppe nach Anspruch 5, **dadurch gekennzeichnet, daß** an der Stelle (25) der Einspritzdüsen (5A) der beheizende Verteiler (20) mit Innengewinde versehene Bohrungen (25, 25') aufweist, zum Einschrauben der Einspritzdüsen (5A) mit einem mit Außengewinde versehenen Ende (51A) dieser.

12. Baugruppe nach Anspruch 11, **dadurch gekennzeichnet, daß** die mit Innengewinde versehenen Bohrungen (25, 25') zum Einschrauben der Einspritzdüsen (5A) genormt sind.

13. Baugruppe nach Anspruch 12, **dadurch gekennzeichnet, daß** die Einspritzdüsen (5A) und die zentrale Düse (5B) in genormten, mit Innengewinde versehenen Bohrungen angebracht sind.

14. Baugruppe nach Anspruch 5, **dadurch gekennzeichnet, daß** der beheizende Verteiler (120) an der Anbringungsstelle (130) der Einspritzdüsen (105A) durchgehende Bohrungen aufweist, die einen Kopf (129) aufnehmen, der an einem Ende einer Hülse (1292) versehen ist, die zusammen mit einem Körper (1294) des Kopfes (129) eine Schulter bildet, mit der der Kopf gegen eine der Flächen des Verteilers (120) angesetzt ist, während das andere Ende (1291) des Kopfes (129) mit einem Außengewinde versehen ist und eine Mutter (130) aufnimmt, die zur Anlage gegen einen Boden der Unterlage (104) dient, wobei die Hülse (1292) ihrerseits eine Auflage (1294) für eine vordere Fläche (102A) des Gesenks- bzw. Untergesenks rund um den Durchlaß (133) bildet, der die Einspritzdüse (105A) aufnimmt, die mit einem mit Außengewinde versehenen Ende (151A) in ein Gewinde (1296) eingeschraubt ist, das in der Hülse (1292) ausgebildet ist.

15. Baugruppe nach Anspruch 14, **dadurch gekennzeichnet, daß** die Köpfe (129) für alle Einspritzdüsen (105A) identisch sind.

16. Baugruppe nach Anspruch 15, **dadurch gekennzeichnet, daß** die Anbringungsstellen der Einspritzdüsen (105A) und der zentralen Düse gleichförmig ausgebildet und genormt sind.

## Claims

1. An injection assembly for mounting on a die (2, 102) of a plastics material injection mold and comprising:
· injection nozzles (5A, 105A) for injecting the plastics material into the mold, the injection nozzles (5A, 105A) being fed with plastics material by at least one central nozzle (5B);
· nozzle control means if there are controlled nozzles; and
· a bearing plate (4, 104) carrying a heating manifold (20, 120), in which injection assembly:
A) the bearing plate (4, 104) is a piece provided with a setback (8) for receiving the heating manifold (20, 120) and positioning supports (13) of the heating manifold (20); and
B) the heating manifold (20, 120) is a piece forming a set of heating channels (26) connected to at least one inlet point (21, 5B) for the plastics material by the central nozzle (5B) and to the injection nozzles (5A, 105A), comprising:
· studs (24, 24', 24", 130) whereby the heating channels (26) of the manifold are connected to the injection nozzles (5A, 105A) and to the central nozzle (5B), and via which the heating manifold (20, 120) bears against the bearing plate (4); and
· branches (22) connecting the studs (24, 24', 130) of the injection nozzles (5A, 105A) with the stud (24") of the central nozzle (5B);
the assembly being **characterized in that** the heating manifold (20) is a mechanical support independent of the bearing plate (4) and carries the injection nozzles (5A, 105A) and the central nozzle (5B).

2. An injection assembly according to claim 1, **characterized in that** the heating manifold (20) also carries control means (actuators) for controlling the injection nozzles (5A, 105A).

3. An injection assembly according to claim 1, **characterized in that** the bearing plate (4, 104) also carries control means (actuators) for controlling the injection nozzles (5A, 105A).

4. An injection assembly according to claim 2 or claim 3, **characterized in that** the bearing plate (4, 104) carries various fluid ducts and electrical cables.

5. An injection assembly according to claim 1, **characterized in that** the bearing plate (4) and the heating manifold (20, 120) have passages (10, 11, 23, 39, 123) for the nozzle (5A, 5B, 105A).

6. An assembly according to claim 1, **characterized in that** the branches (22) of the heating manifold (20, 120) are of rectangular section, being pierced substantially in the middle by a bore (26) constituting the plastics material channel and including, in at least some faces, grooves (27, 27', 127) for receiving a closed metal-clad resistor element (32, 32', 132).

7. An assembly according to claim 6, **characterized in that** the branches (22) have four grooves (27, 27', 127) made in the faces of the branches for receiving closed metal-clad resistance elements (32, 32', 132), said grooves continuing around the studs (24, 24', 24").

8. An assembly according to claim 1, **characterized in that** the studs (24, 24', 24") are in the form of bodies of revolution.

9. An assembly according to claim 1, **characterized in that** the heating manifold has pierced tabs (28) for fixing the manifold (20) in its setback (8) in the bearing plate (4).

10. An assembly according to claim 1, **characterized in that** the heating manifold (20, 120) bears against the bearing plate (4, 104) via interposed heat insulation elements (30, 130).

11. An assembly according to claim 5, **characterized in that** in the location (25) for the injection nozzles (5A), the heating manifold (20) has tapped holes (25, 25') into which the injection nozzles (5A) can be screwed via respective threaded ends (51A) thereof.

12. An assembly according to claim 11, **characterized in that** the tapped holes (25, 25') into which the injection nozzles (5A) can be screwed are standardized.

13. An assembly according to claim 12, **characterized in that** the injection nozzles (5A) and the central nozzle (5B) are mounted in standardized tapped holes.

14. An assembly according to claim 5, **characterized in that** in the location (130) of the injection nozzles (105A), the heating manifold (120) has through bores receiving respective heads (129) each provided at one end with a skirt (1292) co-operating with a body (1294) of the head (129) to form a shoulder whereby the head bears against one of the faces of the manifold (120), the other end (1291) of the head (129) being threaded and receiving a nut (130) serving to bear against an end wall of the bearing plate (104), the skirt (1292) itself forming a bearing surface (1294) for a front face (102A) of the die around the passage (133) receiving the injection nozzle (105A) having a threaded end (151A) screwed into a thread (1296) made in the skirt (1292).

15. An assembly according to claim 14, **characterized in that** the heads (129) are identical for all of the injection nozzles (105A).

16. An assembly according to claim 15, **characterized in that** the locations of the injection nozzles (105A) and of the central nozzle are uniform and standardized.
